# EUROPÄISCHE PATENTSCHRIFT

(11) **EP 2 702 863 B1**
(45) Veröffentlichungstag und Bekanntmachung des Hinweises auf die Patenterteilung: **28.06.2017**
(21) Anmeldenummer: 13181645.6
(22) Anmeldetag: 26.08.2013
(51) Int. Cl.: A01G 9/02

(54) **Pflanzmodul**
Plant module
Module de plante

(30) Priorität: 31.08.2012 AT 9572012; 29.07.2013 AT 2452013 U
(43) Veröffentlichungstag der Anmeldung: 05.03.2014
(73) Patentinhaber: Wüster, Heinrich, 6460 Imst/Tirol (AT)
(72) Erfinder: Wüster, Heinrich, 6460 Imst/Tirol (AT)
(74) Vertreter: Puchberger & Partner Patentanwälte

(56) Entgegenhaltungen:
- EP-A2- 0 364 200
- FR-A1- 2 386 981
- FR-A1- 2 967 331
- US-A- 4 380 136
- US-A1- 2011 192 084
- US-A1- 2012 186 148

## Beschreibung

Die Erfindung bezieht sich auf ein Pflanzmodul mit vertikal übereinander vorgesehenen Pflanzgefäßen mit einer geschlossenen Rückwand und mit mindestens zwei an der Vorderseite der Rückwand übereinander angeordneten, zur Rückwand hin offenen Halbschalen, die zusammen mit der geschlossenen Rückwand jeweils ein eigenes Pflanzgefäß bilden, wobei eine untere Halbschale zusammen mit der geschlossenen Rückwand ein unteres Pflanzgefäß bildet, und mindestens eine obere Halbschale zusammen mit der geschlossenen Rückwand ein oberes Pflanzgefäß bildet.

Für das Bepflanzen eines Balkons werden zumeist mit Blumenerde gefüllte und mit Blumen bepflanzte Blumenkästen verwendet, die in längs dem Balkongeländer angebrachten Blumenkastenhalterungen aufgenommen und entlang dem Balkongeländer in einer Reihe nebeneinander angeordnet sind.

Ferner sind Pflanzmodule mit vertikal übereinander vorgesehenen, voneinander unabhängigen Pflanzgefäßen bekannt, die jedoch den Nachteil haben, dass jedes Pflanzgefäß einzeln bewässert werden muss und die Pflanzgefäße relativ klein sind. Aus der US 4,380,136 A ist ein Pflanzsystem bekannt, bei dem mehrere Pflanzgefäße übereinander angeordnet sind. Die oberen Pflanzgefäße weisen keinen Boden auf und reichen jeweils mit ihrem unteren Abschnitt in das darunter liegende Pflanzgefäß, sodass die Erdkörper der Pflanzgefäße miteinander verbunden sind. Über das obere Pflanzgefäß kann Gießwasser durch die verbundenen Erdkörper bis in das unterste Pflanzgefäß gelangen. Nachteilig ist, dass aufgrund des fehlenden Bodens mit dem Gießwasser viel Erde aus den oberen Pflanzgefäßen in die unteren Pflanzgefäße geschwemmt wird, somit regelmäßig Erde in die oberen Pflanzgefäße nachgefüllt werden muss und aus den unteren Pflanzgefäßen entfernt werden muss. Die Dokumente EP 0 364 136 A2 und FR 2 386 981 A offenbaren ähnliche Pflanzsysteme.

Aufgabe der vorliegenden Erfindung ist ein verbessertes Pflanzmodul zu schaffen, dass die Nachteile des Standes der Technik behebt.

Die Erfindung schlägt ein neues Pflanzmodul vor, mit dem z.B. eine Balkonbrüstung oder eine Wand bepflanzt werden kann, das aber auch freistehend ausgeführt sein kann.

Das neue Pflanzmodul ist erfindungsgemäß, dadurch gekennzeichnet, dass das obere Pflanzgefäß einen Boden mit einer Bodenaussparung aufweist, wobei die Bodenaussparung flächenmäßig kleiner ist als der Innenquerschnitt des Pflanzgefäßes unmittelbar über dem Boden, und der Boden in einem nicht von der Bodenaussparung eingenommenen Bereich mit Wasser-Durchtrittsöffnungen versehen ist.

Beim Füllen des Pflanzmoduls mit Erde, bilden (bildet) sich an der Rückwand unter den (der) Bodenaussparung(en) der (des) oberen Pflanzgefäße(s) (ein Erddamm) Erddämme, so dass ein durchgehender Erdkörper an der Rückwand des Pflanzmoduls entsteht, der von der obersten Halbschale bis zur untersten Halbschale reicht. Entsprechend steht den Pflanzen ein viel größerer Erdkörper zum Verwurzeln zur Verfügung. Ferner muss beim erfindungsgemäßen Pflanzmodul eine Bewässerung nur über das oberste Pflanzgefäß erfolgen, da sich das Wasser durch die Bodenaussparung(en) und den durchgehenden Erdkörper sowie durch die Wasser-Durchtrittsöffnungen in alle Pflanzgefäße bis zum untersten Pflanzgefäß verteilt, wobei beim Durchtritt des Wassers durch die Wasser-Durchtrittsöffnungen ein Ausschwemmen der Erde nicht auftritt, sodass insgesamt ein viel geringeres Ausschwemmen von Erde beobachtet wird.

Gemäß einer bevorzugten Ausführungsform der Erfindung können an der Vorderseite der Rückwand über der unteren Halbschale zwei obere Halbschalen übereinander angeordnet sein, die zusammen mit der geschlossenen Rückwand jeweils ein oberes Pflanzgefäß bilden, das einen Boden mit einer Bodenaussparung aufweist und in einem nicht von der Bodenaussparung eingenommenen Bereich mit Wasser-Durchtrittsöffnungen versehen ist.

Gemäß einem weiteren Merkmal der Erfindung kann vorgesehen sein, dass unter dem von der unteren Halbschale zusammen mit der geschlossenen Rückwand gebildeten, unteren Pflanzgefäß ein Wasserauffangtrog angeordnet ist und dass das untere Pflanzgefäß einen Boden aufweist, der mit Wasser-Durchtrittsöffnungen versehen ist.

Überschüssiges Wasser bleibt somit nicht im untersten Pflanzengefäß stehen, sondern kann abfließen.

Dabei kann vorgesehen sein, dass das über dem Wasserauffangtrog angeordnete, untere Pflanzgefäß einen Boden mit einer Bodenaussparung aufweist, die durch eine mit Wasser-Durchtrittsöffnungen versehenen Platte abgedeckt ist. Damit können die Halbschalen für die oberen Pflanzgefäße und die Halbschale für das untere Pflanzgefäß identisch ausgebildet sein und die Herstellung des Pflanzmoduls wird vereinfacht.

Gemäß einem weiteren Merkmal der Erfindung kann vorgesehen sein, dass an der Rückwand Haltekonsolen für den Wasserauffangtrog vorgesehen sind, um das Gewicht des aufgefangenen Wasser zu tragen.

Vorzugsweise sind die Haltekonsolen mit der Rückwand einstückig und tragen somit zur Versteifung der Rückwand bei.

Bei einer bevorzugten Ausführungsform ist der Wasserauffangtrog mit den Haltekonsolen lösbar, vorzugsweise über eine Schiebeverbindung, verbunden. So kann der Wasserauffangtrog entnommen werden, um ihn zu entleeren, z.B. indem das darin enthaltene Wasser wieder in das oberste Pflanzgefäß gegossen wird.

Eine Ausführungsform des erfindungsgemäßen Pflanzmoduls kann vorsehen, dass die Rückwand aus zwei oder mehreren miteinander verbundenen Rückwandteilen besteht, wobei ein Rückwandteil den Wasserauffangtrog trägt und der oder die anderen Rückwandteile die Halbschalen tragen. So lässt sich modulartig eine Pflanzwand zusammenbauen, deren unterster Rückwandteil den Wasserauffangtrog trägt.

Die Rückwand kann an ihren seitlichen Rändern nach vorne ragende, vorzugsweise konkave Rückwandabschnitte aufweisen, was die Rückwand versteift und einen Teil des Gewichts der Erde auf die Rückwand überträgt.

Vorzugsweise weist die Rückwand an ihrer Rückseite an den seitlichen Rändern Hohlräume auf, wodurch bei der Herstellung der Rückwand eine Materialerspamis zu erzielen ist.

In den Hohlräumen können Verstärkungselemente oder Tragholme angeordnet sein.

Gemäß einem weiteren Merkmal der Erfindung kann vorgesehen sein, dass mindestens eine der mit der Rückwand ein Pflanzgefäß bildenden Halbschalen abnehmbar ist und dass an der Vorderseite der Rückwand nach vorne abstehende Halteelemente für die abnehmbare Halbschale vorgesehen sind. So können die Halbschalen im Verkauf getrennt von der Rückwand angeboten werden, was einen individuellen Zusammenbau des Pflanzmoduls erlaubt und geringeres Lagervolumen benötigt. Ferner kann eine beschädigte Halbschalen leicht ausgetauscht werden.

Weist die Rückwand nach vorne ragende Rückwandabschnitte auf, können die Halteelemente an diesen Rückwandabschnitten angeordnet sein.

Vorzugsweise ist die abnehmbare Halbschale mit ihren Seitenwänden an von der Rückwand nach vorne abstehenden Halteflanschen als Halteelemente abgestützt, die auch einer Verformung der Seitenwände durch das Gewicht der Erde und des Wassers entgegenwirken.

Dabei verlaufen die sich an den von der Rückwand nach vorne abstehenden Halteflanschen abstützenden Seitenwände und die von der Rückwand nach vorne abstehenden Halteflansche gegenüber der Vertikalen sich nach unten verjüngend geneigt. Die sich nach unten verjüngende Halbschale wird so durch das Gewicht der Erde und des Wassers in einen durch die Halteflansche gebildeten V-förmigen Sitz gepresst.

Alternativ oder zusätzlich kann die abnehmbare Halbschale mit ihrem Boden an von der Rückwand nach vorne abstehenden Vorsprüngen als Halteelemente abgestützt sein, die das Gewicht tragen.

Bei einer besonderes bevorzugten Ausführungsvariante nimmt die normal zur Rückwand verlaufende Tiefe mindestens eines Pflanzgefäßes von einer Seite des Pflanzgefäßes zu seiner anderen Seite hin zu. Ist dies bei mehreren Pflanzgefäßen so, kann mindestens ein Pflanzgefäß seine größere Tiefe auf der anderen Seite aufweist, wie das oder die anderen Pflanzgefäße. Im Bereich der größeren Tiefe kann dann eine Pflanze wachsen, die eine Höhe hat, die größer ist als der Abstand zwischen den Pflanzgefäßen.

Gemäß einer anderen Ausführungsvariante ist vorgesehen, dass mindestens eine der Halbschalen zweiteilig ist und einen mit der Rückwand einstückig ausgebildeten, hinteren Schalenteil und einen von der Rückwand abnehmbaren, vorderen Schalenteil besitzt. Die mit der Rückwand einstückig ausgebildeten hinteren Schalenteile tragen zur Versteifung der Rückwand bei.

Eine noch bessere Versteifung der Rückwand erreicht man, wenn die Seitenwände der hinteren Schalenteile zur Vertikalen geneigt, sich nach unten verjüngend, verlaufen und die Seitenwände der hinteren Schalenteile zweier übereinanderliegender Pflanzgefäße jeweils durch eine vorzugsweise mit der Rückwand ebenfalls einstückige Verstrebung miteinander verbunden sind, die sich zur Vertikalen in die entgegengesetzte Richtung neigt wie die Seitenwände. Die Seitenwände und die Verstrebungen bilden dann im Zickzack verlaufende Versteifungselemente.

Gemäß einem weiteren Merkmal der Erfindung kann vorgesehen sein, dass die Bodenaussparung in dem mit der geschlossenen Rückwand einstückig ausgebildeten, hinteren Schalenteil der zweiteiligen Halbschale angeordnet ist.

Gemäß einem weiteren Merkmal der Erfindung kann vorgesehen sein, dass an den Seitenrändern der Rückwand und/oder am unteren Rand der Rückwand nach vorne bzw. nach unten abstehende Stege vorgesehen sind, die bei einer Positionierung des Pflanzmoduls an einer Wand Wasser von der Wand wegleiten.

Bei einer Ausführungsform der Erfindung ist vorgesehen, dass das Pflanzmodul mit zwei an den Seiten rändern der Rückwand angeordneten Standfüßen versehen ist. Diese Ausbildung sieht ein frei stehendes Pflanzmodul vor.

Dabei können die Standfüße mit vorzugsweise arretierbaren Rollen versehen sein, wodurch das Pflanzmodul verschiebbar ist.

Ferner kann vorgesehen sein, dass an der Vorderseite der Rückwand mehrere Rippen ausgebildet sind, die sich jeweils parallel zu den Böden der Halbschalen in einem Abstand zu den Böden oberhalb derselben erstrecken. Diese Rippen verbessern den Halt des Erdkörpers in den Pflanzgefäßen und dienen der Wasserführung, indem die verhindern, dass ein rasch nach unten fließender Wasserfilm entsteht. Sie leiten das Wasser in den Erdkörper.

Dabei erstrecken sich vorzugsweise jeweils zwei Rippen im Bereich jeder Halbschale an der Rückwand.

Insbesondere erstrecken sich die Rippen an ihren Enden parallel zum Verlauf der Seitenwände der Halbschale und im Abstand zu diesen.

Bevorzugt ist eine oder mehrere der Halbschalen entlang der Bodenaussparung oder im Bereich der Bodenaussparung durch eine Kante verstärkt sind, deren Höhe größer als die Materialstärke der Halbschalen in diesem Bereich ist. Diese Kante versteift die Halbschale, verhindert ein Einreißen des die Bodenausnehmung umgebenden Materials und dient der Führung des Gießwassers in den Erdkörper.

Erfindungsgemäß können vom Wasserauffangtrog ein oder mehrere Wasserrückführungselemente zu mindestens einem, bevorzugt dem obersten, Pflanzgefäß führen, so dass das im Wasserauffangtrog aufgefangene Wasser zur vorzugsweise automatischen Bewässerung des Pflanzmoduls genutzt werden kann.

Die Wasserrückführungselemente können z. B. Glasfaserdochte sein.

Vorzugsweise ist die Anzahl der Wasserrückführungselemente bzw. die Kapazität der Wasserführungsmenge der Wasserrückführungselemente, die in ein bestimmtes Pflanzengefäß münden, größer ist als die Anzahl der Wasserrückführungselemente bzw. die Kapazität der Wasserrückführungsmenge der Wasserrückführungselemente, die in das darunter liegende Pflanzgefäß münden. Durch die Schwerkraft sinkt das im durchgehenden Erdkörper enthaltene Wasser ab, sodass der Erdkörper im obersten Pflanzgefäß am trockensten ist und nach unten hin immer feuchter wird. Entsprechend wir daher mit dieser bevorzugten Ausführung dem obersten Pflanzgefäß am meisten Wasser aus dem Wasserauffangtrog zugeführt und den darunterliegenden Pflanzgefäßen sich nach unten hin reduzierende Mengen an Wasser. Es kann auch sein, dass über die Wasserrückführelemente nur dem obersten Pflanzgefäß Wasser zugeführt wird oder dass allen Pflanzgefäßen außer dem untersten Pflanzgefäß Wasser zugeführt wird.

Nachstehend wird die Erfindung anhand von in den Zeichnungen dargestellten Ausführungsbeispielen näher erläutert.

In den Zeichnungen zeigen:
Fig. 1 eine perspektivische Ansicht einer ersten Ausführungsvariante des erfindungsgemäßen Pflanzmoduls mit zwei Pflanzgefäßen,
Fig. 2 das Pflanzmodul aus Fig. 1 in einer entlang der vertikalen Symmetriemittelebene geschnittenen Darstellung,
Fig. 3 eine zweite Ausführungsvariante des erfindungsgemäßen Pflanzmoduls mit drei Pflanzgefäßen und einem Wasserauffangtrog, wobei das Pflanzmodul ein fahrbares Gestell aufweist,
Fig. 4 das Pflanzmodul aus Fig. 3 aus geänderter Perspektive und ohne fahrbares Gestell,
Fig. 5 die Rückwand des Pflanzmoduls aus den Fig. 3 und 4 in einer perspektivischen Ansicht von vorne,
Fig. 6 das Pflanzmodul aus Fig. 4 in einer Schnittansicht entlang der Längsmittelebene und gefüllt mit Erde,
Fig. 7 eine dritte Ausführungsvariante des erfindungsgemäßen Pflanzmoduls in einer perspektivischen Ansicht,
Fig. 8 das Pflanzmodul aus Fig. 7 aus geänderter Perspektive, und
Fig.9 eine vierte Ausführungsvariante des erfindungsgemäßen Pflanzmoduls.

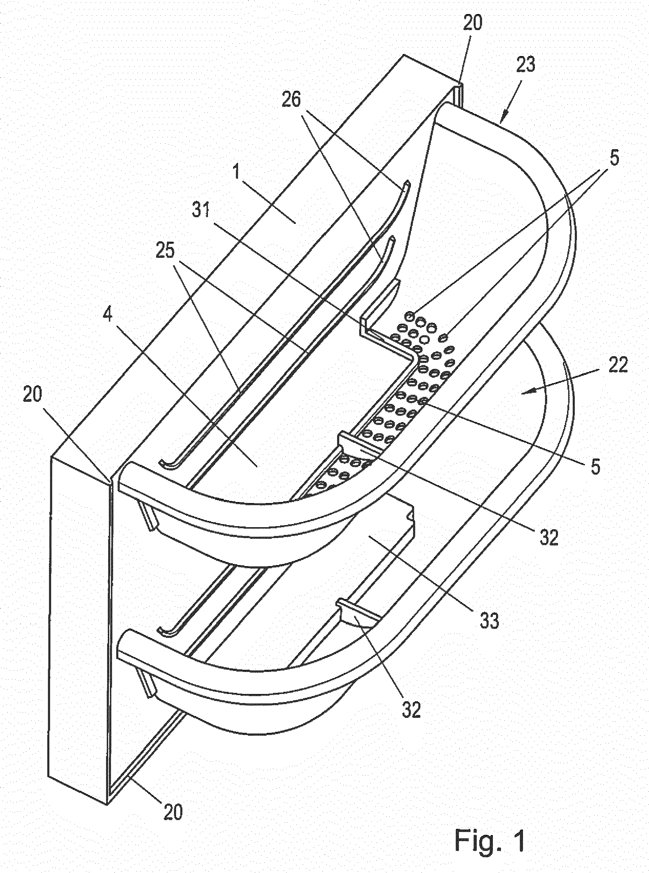

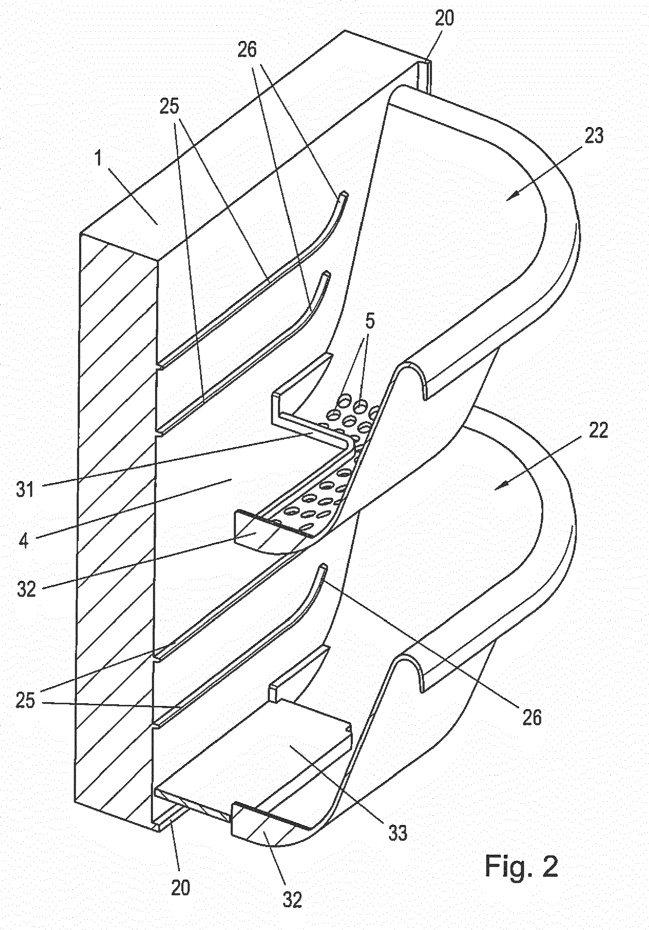

In der in den Figuren 1 und 2 gezeigten Ausführungsvariante enthält das erfindungsgemäße Pflanzmodul eine Rückwand 1, eine obere Halbschale 23, die mit der Rückwand 1 ein oberes Pflanzgefäß bildet, und eine untere Halbschale 22, die mit der Rückwand 1 ein unteres Pflanzgefäß bildet. Die Rückwand 1 und die Halbschalen 22 und 23 sind miteinander einstückig ausgeformt und sind vorzugsweise aus Kunststoffmaterial. In der oberen Halbschale 23 ist eine Bodenaussparung 4 für das obere Pflanzgefäß vorgesehen und die Halbschale 23 weist auch im Bereich ihres Bodens zahlreiche Wasser-Durchtrittsöffnungen 5 auf. Zur Versteifung der oberen Halbschale 23 sind eine entlang der Bodenaussparung 4 verlaufende Kante 31 und eine sich in der Längsmittelebene erstreckender Versteifungssteg 32 vorgesehen. Die Kante 31 verstärkt auch den Rand der Bodenaussparung 4 und verhindert ein Einreißen des Kunststoffmaterials unter dem Gewicht der feuchten Erde. An der Kante 31 sammelt sich Wasser und wird in den Erdkörper geführt, um nicht zu rasch durchzurinnen. Die untere Halbschale 22 ist geschlossen ausgebildet, weist ebenfalls einen Versteifungssteg 32 in der Längsmittelebene auf und ist im Bodenbereich mit einer Verstärkung 33 ausgebildet. In jedem Pflanzgefäß sind an der Rückwand 1 zwei Rippen 25 vorgesehen, die sich parallel zum Boden der Halbschale und im Abstand davon erstrecken, an den Enden folgen die Rippen dem Verlauf der Seitenwände der Halbschalen 22, 23 und verlaufen im Abstand zu diesen Seitenwänden. Die Rippen 25 geben dem Endkörper Halt und führen das Wasser in den Erdkörper.

Seitlich und an der unteren Kante weist die Rückwand 1 Stege 20 auf, die eventuell über die Rückwand 1 rinnendes Wasser nach vorne wegleiten, um die Wand, an der die Rückwand 1 montiert ist, zu schützen.

Das erfindungsgemäße Pflanzmodul wird vor dem Bepflanzen mit Erde gefüllt. Dabei wird Erde zuerst beim unteren Pflanzgefäß in die untere Halbschale 22 eingefüllt. In der unteren Halbschale 22 entsteht ein an die Rückwand 1 angrenzender, unterer Erdkörper. Dann wird Erde beim darüberliegenden oberen Pflanzgefäß in die obere Halbschale 23 eingefüllt. Ein Teil der Erde fällt durch die Bodenaussparung 4 des oberen Pflanzgefäßes hindurch nach unten auf den in der unteren Halbschale 22 angeordneten, unteren Erdkörper. Die aus der Bodenaussparung 4 des oberen Pflanzgefäßes austretende Erde bildet einen an der Rückwand 1 des Pflanzmoduls anliegenden Erddamm, der vom unteren Erdkörper nach oben bis in die Bodenaussparung 4 des oberen Pflanzgefäßes reicht und diese von unten verschließt. Die nach dem Entstehen dieses Erddammes in die obere Halbschale 23 eingefüllte Erde bildet einen die obere Halbschale 23 ausfüllenden, an die Rückwand 1 angrenzenden, oberen Erdkörper. Auf diese Weise entsteht im Pflanzmodul ein einziger, aus drei Teilkörpern bestehender, an die Rückwand 1 des Pflanzmoduls angrenzender Erdkörper, der sich entlang der Rückwand 1 von der oberen Halbschale 23 nach unten bis in die untere Halbschale 22 erstreckt.

Das Pflanzmodul kann im oberen Pflanzgefäß mit tief wurzelnden Pflanzen bepflanzt werden. Die Wurzeln können in dem an die Rückwand 1 angrenzenden Erdkörper vom oberen Pflanzgefäß nach unten bis in das untere Pflanzgefäß wachsen. Das untere Pflanzgefäß kann mit seicht wurzelnden Pflanzen bepflanzt werden.

Zum Gießen der Pflanzen in den beiden übereinander angeordneten Pflanzgefäßen genügt es, das obere Pflanzgefäß mit Wasser zu begießen. Das Gießwasser gelangt vom obere Pflanzgefäß über den an die Bodenaussparung 4 des oberen Pflanzgefäßes nach unten anschließenden Erddamm und über die an der Unterseite des oberen Pflanzgefäßes angeordneten Wasser-Durchtrittsöffnungen 5 in das untere Pflanzgefäß.

Die Rippen 25 und die Kante 31 sorgen dabei dafür, dass das Wasser sich ansammelt, sich über die Breite der Pflanzgefäße verteilt und in die Erdkörper und den Erddamm hineingeführt wird.

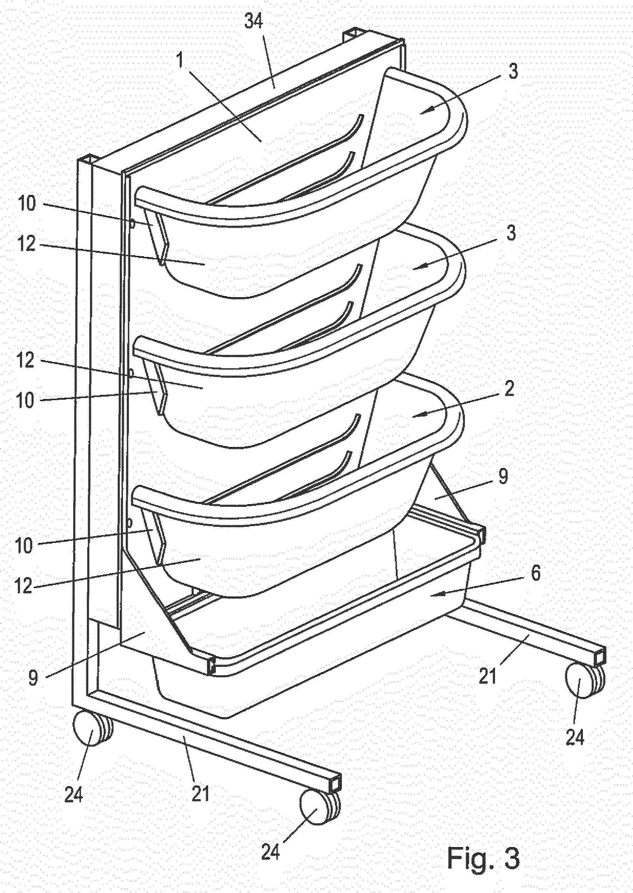

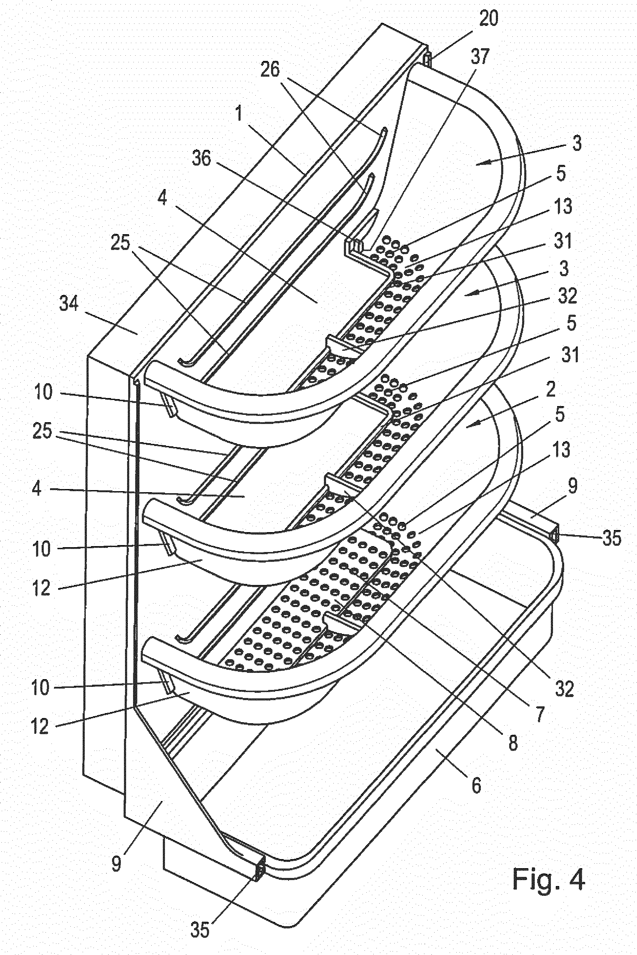

Die in den Figuren 3 bis 6 gezeigte Ausführungsform weist drei Pflanzgefäße und einen Wasserauffangtrog 6 auf und das Pflanzmodul ist mit Standfüßen 21 versehen, die vorzugsweise arretierbare Rollen 24 aufweisen. Somit ist das Pflanzmodul freistehend und beliebig bewegbar. Wie man sehen kann, ist die Rückwand 1 des gezeigten Pflanzmoduls mit einer wesentlich geringeren Dicke ausgeführt als die Rückwand 1 des Pflanzmoduls aus den Figuren 1 und 2, welche aufgrund ihrer Dicke sehr steif ist. Die Rückwand 1 des Pflanzmoduls aus den Figuren 3 bis 6 ist daher an einer steifen Platte oder einem steifen Rahmen 34 montiert, an dem auch die Standfüße 21 angebracht sind. Wie in der ersten Ausführungsform weisen die oberen Halbschalen 3 eine von einer Kante 31 umgebene Bodenaussparung 4 auf, und in den oberen Halbschalen sind Versteifungsstege 32 in der Längsmittelebene vorgesehen. Auch bei dieser Ausführungsform sind an der Rückwand 1 in den Pflanzgefäßen Rippen 25 vorgesehen, die für einen besseren Halt des Erdkörpers in den Pflanzgefäßen sorgen und auch zur Wasserführung dienen, nämlich verhindern, dass an der Rückwand 1 ein rasch nach unten fließender Wasserfilm entsteht und vielmehr den Wasserstrom in den Erdkörper lenken.

Seitliche Stege 20, die von der Rückwand 1 nach vorne ragen, und ein unterer Steg 20, der von der Rückwand 1 nach vorne und unten ragt, verhindern großteils, dass Wasser, welches über die Rückwand 1 rinnt, weiter auf eine Wand rinnt, an die das Pflanzmodul gegebenenfalls geschoben ist.

Im Gegensatz zur ersten Ausführungsvariante sind in der unteren Halbschale 2, wie in den beiden oberen Halbschalen 3, Wasser-Durchtrittsöffnungen 5 vorgesehen, sodass überschüssiges Wasser in einen darunter angeordneten Wasserauffangtrog 6 tropfen kann. Im gezeigten Beispiel weist auch die untere Halbschale eine Bodenaussparung 4 auf, die jedoch durch eine Platte 8 mit Wasser-Durchtrittsöffnungen 7 abgedeckt ist. Alternativ könnte die untere Schale keine Bodenaussparung aufweisen, jedoch im gesamten Bodenbereich Wasser-Durchtrittsöffnungen aufweisen. Die dargestellte Variante stellt jedoch einen Vorteil für die Herstellung und Lagerhaltung dar, da somit alle Halbschalen 2, 3 im gleichen Herstellungsprozess gefertigt werden können und für die untere Halbschale 2 zusätzlich die abdeckende Platte 8 verwendet wird.

Der Wasserauffangtrog 6 wird seitlich durch zwei Haltekonsolen 9 gehalten, die im vorliegenden Fall mit der Rückwand 1 einstückig ausgebildet sind. Wie man erkennen kann, haben die Haltekonsolen 9 auf der dem Wasserauffangtrog 6 zugewandten Seite jeweils eine Nut 35, in die jeweils eine Leiste an der Außenseite des Wasserauffangtrogs 6 eingreift, sodass der Wasserauffangtrog 6 horizontal aus der Haltekonsole 9 gezogen werden kann, um das darin gesammelte Wasser auszuleeren, wobei das Wasser z.B. wieder zur Bewässerung der Pflanzen in den Pflanzgefäßen verwendet werden kann.

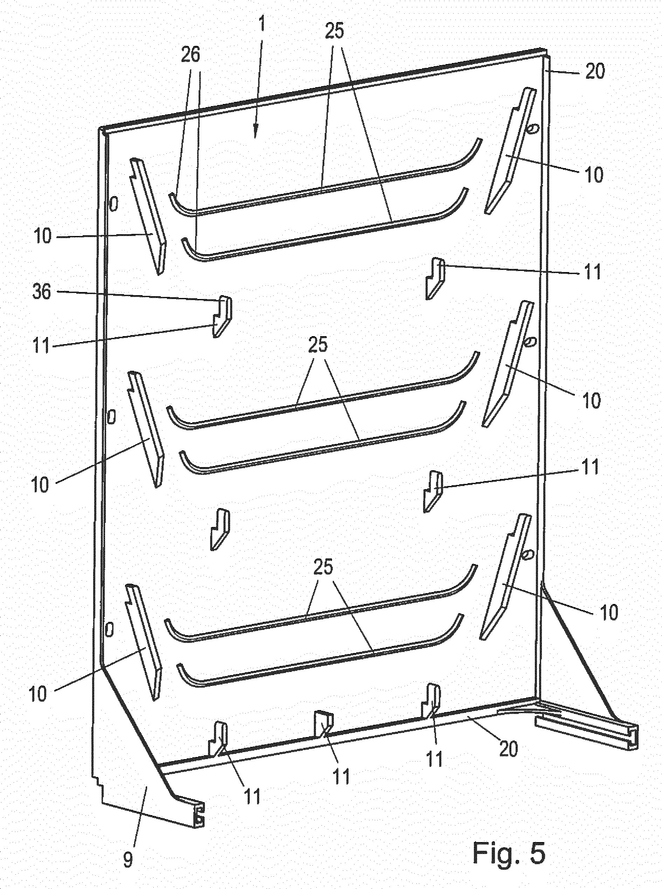

Bei der gezeigten Ausführungsvariante sind die Halbschalen 2, 3 von der Rückwand 1 abnehmbar, wobei an der Rückwand 1, wie man auch in der Fig. 5 sieht, in der nur die Rückwand 1 dargestellt ist, dafür Halteflansche 10 und Vorsprünge 11 einstückig mit der Rückwand 1 ausgebildet vorgesehen sind. Im gezeigten Ausführungsbeispiel sind die Halteflansche 10 schräg zur Vertikalen an der Rückwand 1 angebracht, wobei jeweils zwei Halteflansche 10 auf gleicher Höhe nach unten hin aufeinander zulaufen. Die Schräge der Halteflansche 10 entspricht der Schräge der Seitenwände der Halbschalen 2, 3, sodass diese die Seitenwände 12 im Anschlussbereich an die Rückwand 1 abstützen. Das obere Ende der Halteflansche 10 greift jeweils unter den Rand der Halbschalen 2 und 3. Das Gewicht der Erde und des Wassers, die in jedem Pflanzgefäß enthalten sind, drücken die sich nach unten hin verjüngende Halbschale 2, 3 in einen V-förmigen Sitz, der aus den beiden Halteflanschen 10 auf gleicher Höhe gebildet wird. Zusätzlich wird jede Halbschale 2, 3 im Bereich ihres Bodens 13 von jeweils hakenförmigen Vorsprüngen 11 gestützt, die mit ihrem oberen Ende 36 in eine Öffnung 37 im Boden 13 der Halteschalen 2, 3 eingreifen, wobei die Ausnehmungen 37 jeweils links und rechts von der Bodenaussparung 4 im Boden 13 der Halbschale 2, 3 vorgesehen sind. Für die untere Halbschale 2 ist zusätzlich in der Mitte zwischen den beiden hakenförmigen Vorsprüngen 11 ein mittlerer Vorsprung 11 vorgesehen, der die untere Halbschale 2 von unten stützt. Aufgrund der Schwerkraft befindet sich in der unteren Halbschale 2 die meiste Feuchtigkeit in der Erde und entsprechend muss die untere Halbschale 2 und ihre Verbindung mit der Rückwand 1 ein höheres Gewicht tragen.

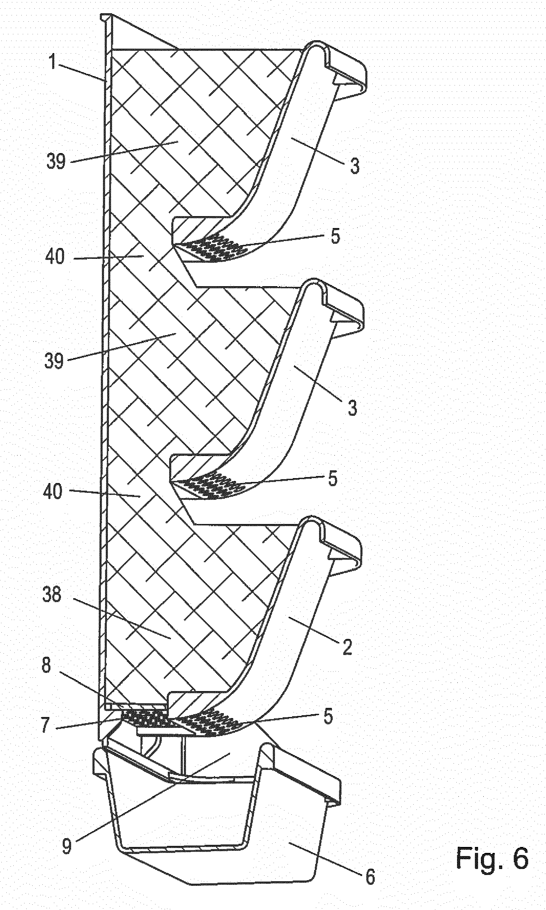

In der Figur 6 ist in einem Querschnitt das mit Erde gefüllte Pflanzmodul der Figuren 3 bis 5 dargestellt.

Diese Ausbildung des Pflanzmoduls sieht drei übereinander angeordnete Pflanzgefäße vor, nämlich ein unteres Pflanzgefäß, das von der Rückwand 1 und der unteren

Halbschale 2 begrenzt ist, ein über dem unteren Pflanzgefäß angeordnetes, erstes oberes Pflanzgefäß, das von der Rückwand 1 und der unmittelbar über der unteren Halbschale 2 angeordneten, ersten oberen Halbschale 3 begrenzt ist, ein über dem ersten oberen Pflanzgefäß angeordnetes, zweites oberes Pflanzgefäß, das von der Rückwand 1 und der über der ersten oberen Halbschale 3 angeordneten, zweiten oberen Halbschale 3 begrenzt ist.

Die drei übereinander angeordneten Pflanzgefäße des Pflanzmoduls werden von unten nach oben mit Erde gefüllt. Beim unteren Pflanzgefäß entsteht ein die untere Halbschale 2 ausfüllender, an die Rückwand 1 des Pflanzmoduls angrenzender, unterer Erdkörper 38. Beim ersten, oberen Pflanzgefäß entsteht ein die erste obere Halbschale 3 ausfüllender, an die Rückwand 1 des Pflanzmoduls angrenzender, erster oberer Erdkörper 39 und ein an die Bodenaussparung 4 des ersten, oberen Pflanzgefäßes nach unten anschließender an die Rückwand 1 des Pflanzmoduls angrenzender, erster Erddamm 40, der den ersten oberen Erdkörper 39 mit dem unteren Erdkörper 38 verbindet. Beim zweiten oberen Pflanzgefäß entsteht ein die zweite obere Halbschale 3 ausfüllender, an die Rückwand 1 des Pflanzmoduls angrenzender, zweiter oberer Erdkörper 39 und ein an die Bodenaussparung 4 des zweiten, oberen Pflanzgefäßes nach unten anschließender an die Rückwand 1 des Pflanzmoduls angrenzender, zweiter Erddamm 40, der den zweiten oberen Erdkörper 39 mit dem ersten oberen Erdkörper 39 verbindet. Das mit Erde gefüllte Pflanzmodul enthält einen an die Rückwand 1 des Pflanzmoduls angrenzenden Erdkörper, der sich entlang der Rückwand 1 des Pflanzmoduls vom zweiten oberen Pflanzgefäß nach unten bis in das untere Pflanzgefäß erstreckt und aus fünf entlang der Rückwand 1 übereinander angeordneten Teilkörpern besteht. Die fünf Teilkörpern sind die in den drei Halbschalen 2, 3 angeordneten, an die Rückwand 1 angrenzenden Erdkörper 38, 39 und die beiden an der Rückwand 1 des Pflanzmoduls anliegenden Erddämme 40, die den unteren Erdkörper 38 mit dem ersten oberen Erdkörper 39 und den ersten oberen Erdkörper 39 mit dem zweiten oberen Erdkörper 39 verbinden.

Bei diesem Pflanzmodul können die beiden oberen Pflanzgefäßen mit tief wurzelnden Pflanzen bepflanzt werden. Die Wurzeln können in dem an die Rückwand 1 des Pflanzmoduls angrenzenden, sich entlang der Rückwand 1 nach unten bis in das untere Pflanzgefäß erstreckenden Erdkörper 38, 39 nach unten wachsen. Das untere Pflanzgefäß kann mit seicht wurzelnden Pflanzen bepflanzt werden.

Zum Gießen der Pflanzen in den drei übereinander angeordneten Pflanzgefäßen des Pflanzmoduls genügt es, das oberste Pflanzgefäß mit Wasser zu begießen. Das Gießwasser gelangt von dem zweiten, oberen Pflanzgefäß über den an die Bodenaussparung 4 des zweiten, oberen Pflanzgefäßes nach unten anschließenden Erddamm 40 und über die an der Unterseite des zweiten, oberen Pflanzgefäßes angeordneten Wasser-Durchtrittsöffnungen 5 nach unten in das erste, obere Pflanzgefäß. Von dort gelangt das Gießwasser über den an die Bodenaussparung 4 des ersten, oberen Pflanzgefäßes nach unten anschließenden Erddamm 40 und über die an der Unterseite des ersten, oberen Pflanzgefäßes angeordneten Wasser-Durchtrittsöffnungen 5 nach unten in das untere Pflanzgefäß, von wo überschüssiges Wasser durch die Wasser-Durchtrittsöffnungen 5 im Boden 13 des unteren Pflanzgefäßes und durch die Wasser-Durchtrittsöffnungen 7 in der Platte 8, die die Bodenaussparung 4 im unteren Pflanzgefäß abdeckt, in den Wasserauffangtrog 6 abfließen kann.

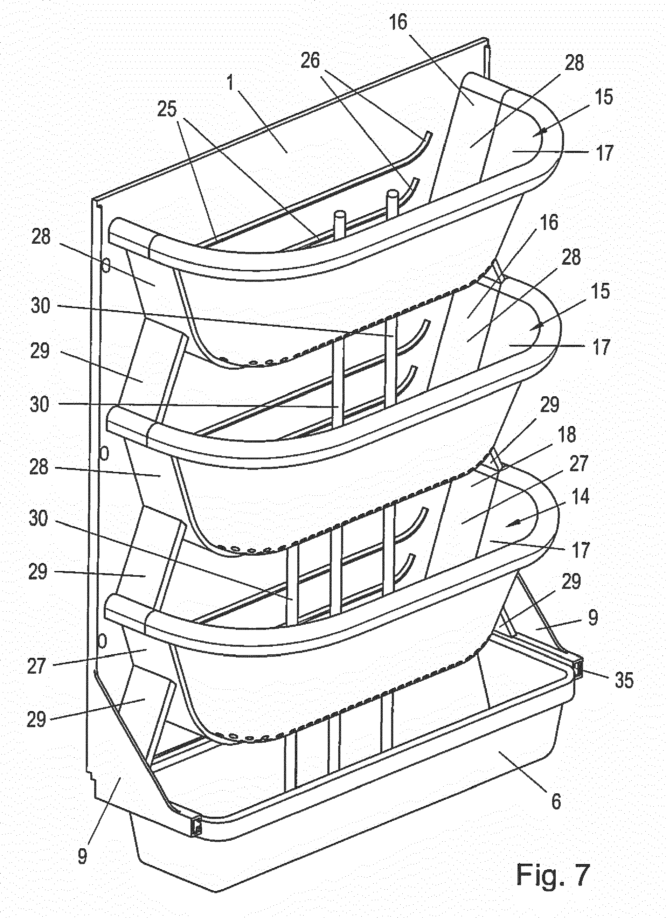

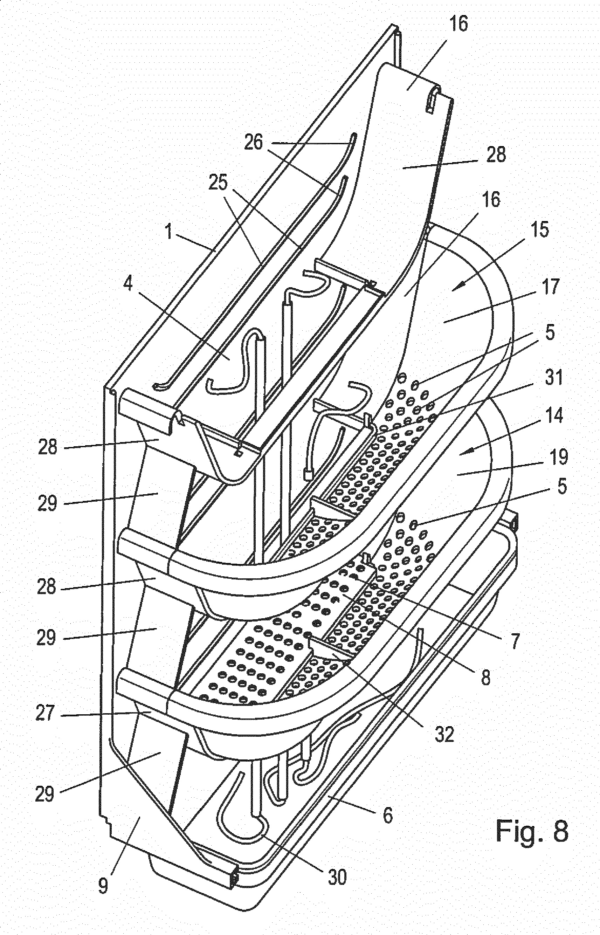

Schließlich ist in den Figuren 7 und 8 eine dritte Ausführungsvariante dargestellt, bei der die Halbschalen 14, 15 zweiteilig ausgeführt sind, wobei der jeweils hintere Schalenteil 16, 18 mit der Rückwand 1 einstückig ausgebildet ist und der jeweils vordere Schalenteil 17, 19 abnehmbar ist. Die in den beiden oberen Pflanzgefäßen vorgesehene Bodenaussparung 4 ist in den beiden hinteren Schaltenteilen 16 der beiden oberen Halbschalen 15 ausgebildet, ebenso ist die im unteren Pflanzgefäß vorgesehene, durch die Platte 8 abgedeckte, Bodenaussparung 4 im hinteren Schalenteil 18 der unteren Halbschale 14 vorgesehen. In der Darstellung der Fig. 8 ist der vordere Schalenteil 17 der obersten Halbschale 15 entfernt und man erkennt, dass nach Anfügen des vorderen Teils 17 dieser den hinteren Schalenteil 16 überlappt und von diesem über die gesamte Breite des Pflanzgefäßes gestützt wird. Wie in der zweiten Ausführungsform sind Kanten 31 im Bereich der Bodenaussparungen 4 vorgesehen, sowie mittige Versteifungsstege 32. Die abnehmbaren vorderen Schalenteile 17, 19 sowohl der oberen Halbschalen 15 als auch der unteren Halbschale 14 weisen Wasser-Durchbruchsöffnungen 5 auf und die Platte 8, die in der unteren Halbschale 14 die Bodenaussparung 4 abdeckt, ist mit Wasser-Durchtrittsöffnungen 7 versehen. Die Seitenwände der Halbschalen 14, 15 sind gegenüber der Vertikalen geneigt, sodass sich die Halbschalen 14, 15 nach unten hin verjüngen. Der untere Bereich jeder Seitenwand 28 der hinteren Schalenteile 16 der beiden oberen Halbschalen 15 ist mit einer Verstrebung 29 verbunden, die mit dem Rand der darunterliegenden Halbschale 14, 15 im Bereich ihres hinteren Schalenteils 16, 18 verbunden ist. Auch die Seitenwand 27 des hinteren Schalenteils 18 der unteren Halbschale 14 ist mit einer Verstrebung 29 verbunden, die mit der Haltekonsole 9 verbunden ist. Die Verstrebungen 29 sind ebenfalls gegenüber der Vertikalen geneigt, jedoch in entgegen gesetzte Richtung zur Richtung der Neigung der Seitenwände 27, 28, sodass sie gemeinsam mit den Seitenwänden 27, 28 ein Versteifungselement für die Rückwand 1 in Zickzack-Form bilden.

Das Befüllen mit Erde und das Gießen erfolgt analog zur vorangegangenen Ausführungsvariante.

Wie in Fig. 7 allgemein dargestellt, führen vom Wasserauffangtrog 6 Wasserrückführungselemente 30 durch die Platte 8 und die Bodenaussparungen 4 in die beiden oberen Pflanzgefäße, sodass das im Wasserauffangtrog 6 enthaltene Wasser zusätzlich zum Gießwasser für die Bewässerung genutzt werden kann und der Trog 6 seltener oder gar nicht entleert werden muss. Die Wasserrückführungselemente 30 durchsetzen dabei den Erdkörper und enden auf verschiedenen Höhen des Erdkörpers. Diese Wasserrückführungselemente 30 können z.B. als Glasfaserdochte ausgeführt sein, wie es in Fig. 8 als Variante dargestellt ist. In diesem Fall weisen die Glasfaserdochte eine Kunststoffhülle auf und ragen in jenen Bereich aus der Kunststoffhülle, wo Wasser abgegeben werden soll. Im gezeigten Beispiel führen zwei Wasserrückführungselemente 30 in das oberste Pflanzgefäß und ein Wasserrückführungselement 30 in das mittlere Pflanzgefäß. Am oberen Ende weisen die Glasfaserdochte jeweils keine Hülle auf.

Wie bereits zur zweiten Ausführungsform beschrieben, wird das Pflanzmodul an sich nur über das oberste Pflanzgefäß gegossen. Aufgrund der Schwerkraft fließt das Wasser jedoch durch die Bodenaussparungen 4 und den Erdkörper, sowie durch die Wasser-Durchtrittsöffnungen 5 ins mittlere Pflanzgefäß und schließlich ins untere Pflanzgefäß und überschüssiges Wasser fließt durch die Wasser-Durchtrittsöffnungen 5 und die Wasser-Durchtrittsöffnungen 7 in der Platte 8 aus dem untersten Pflanzgefäß in den Wasserauffangtrog 6. Dadurch ist der Erdkörper im unteren Pflanzgefäß am feuchtesten und im obersten Pflanzgefäß am trockensten. Dementsprechend kann, wie in diesem Beispiel dargestellt, durch eine größere Anzahl von Wasserrückführelementen 30 dem obersten Pflanzgefäß über zwei Wasserrückführungselemente 30 doppelt so viel Wasser aus dem Wasserauffangtrog 6 zugeführt werden, wie dem mittleren Pflanzgefäß und in das untere Pflanzgefäß wird im vorliegenden Beispiel kein Wasser rückgeführt. Selbstverständlich kann durch eine Änderung der Anzahl der zwischen dem Wasserauffangtrog 6 und den Pflanzgefäßen vorgesehenen Wasserrückführungselementen 30 eine andere Aufteilung des rückgeführten Wassers erfolgen. So kann z.B. auch ein Teil des rückgeführten Wassers dem unteren Pflanzgefäß zugeführt werden, wenn man ein oder mehrere Wasserrückführungselemente zwischen dem Wasserauffangtrog 6 und dem unteren Pflanzgefäß vorsieht. Anstelle von verschiedener Anzahl von Wasserrückführungselementen kann der unterschiedliche Wasserbedarf auch durch Wasserrückführungselemente mit unterschiedlicher Kapazität der Wasserführungsmenge abgedeckt werden.

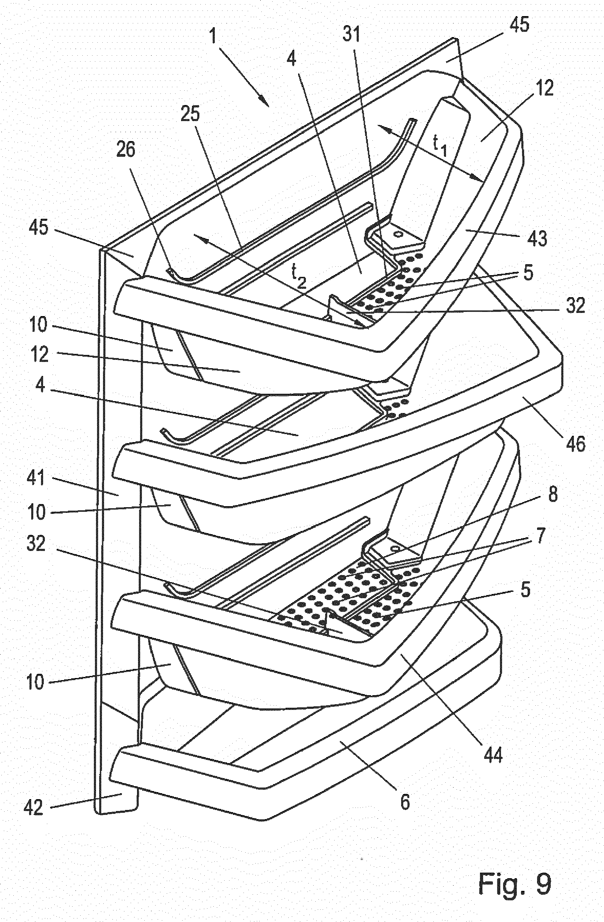

Bei der in Fig. 9 gezeigten Ausführungsvariante besteht die Rückwand 1 aus zwei Rückwandteilen, wobei der obere Rückwandteil 41 die oberen Halbschalen 43 und 46 und auch die untere Halbschale 44 trägt und der untere Rückwandteil 42 die Wasserauffangschale 6 trägt. Eine Pflanzwand kann aus beliebig vielen oberen, übereinander und/oder auch nebeneinander angeordneten Rückwandteilen, die jeweils zwei oder mehr Halbschalen tragen zusammengebaut werden. Daran wird unten ein unterer Rückwandteil oder gegebenenfalls werden mehrere nebeneinander angeordnete untere Rückwandteile angefügt. An ihren seitlichen Rändern weist die Rückwand 1 nach vorne ragende, konkave Rückwandabschnitte 45 auf, die die Rückwand versteifen. Im Bereich der Rückwandabschnitte 45 sind an der Rückwand 1 und mit dieser einstückig Halteelemente 10 vorgesehen, an denen sich die Halbschalen 43, 46 und 44 mit ihren Seitenwänden 12 abstützen und befestigt sein können. Rippen 25 mit nach oben verlaufenden Enden 26 an der Rückwand verhindern ein zu rasches Abfließen von Gießwasser. An der Rückseite der Rückwand können im Bereich der Rückwandabschnitte 45 Hohlräume vorgesehen sein, um Material und Gewicht zu sparen. Zur Versteifung und für Montagezwecke können in den Hohlräumen Tragholme und/oder Verstärkungselemente aufgenommen sein.

Alle drei Halbschalen 43, 46 und 44 weisen eine Bodenaussparung 4 auf, wobei die Bodenaussparung der unteren Halbschale 44 durch eine Platte 8 mit Wasser-Durchtrittsöffnungen 7 abgedeckt ist. Beim Füllen des Pflanzmoduls mit Erde bildet sich ein Erdkörper, der sich von der unteren Halbschale durch die Bodenaussparungen 4 der oberen Halbschalen 46 und 43 bis in die oberste Halbschale 43 erstreckt. Durch die Wasser-Durchtrittsöffnungen 5 kann überschüssiges Gießwasser aus den Halbschalen 43, 46, 44 in die jeweils darunterliegen Halbschalen 46, 44 bzw. den Wasserauffangtrog abfließen. Die Platte 8 in der unteren Halbschale 44 verhindert das Ausschwemmen der Erde, erlaubt aber den Wasserdurchtritt durch die Wasserdurchtrittsöffnungen 7. In jeder der Halbschalen 43, 46 und 44 sorgt ein mittiger Versteifungssteg 32 und eine um die jeweilige Bodenaussparung verlaufende erhöhte Kante 31 für erhöhte Stabilität und Langlebigkeit der Halbschalen 43, 46 und 44.

Die Halbschalen haben in dieser Ausführungsvariante eine asymmetrische Form, d.h. sie weisen an ihrer einen Seite eine geringere Tiefe t₁ auf als an ihrer anderen Seite, wo die Tiefe t₂ größer ist. Im vorliegenden Fall sind die oberste Halbschale 43 und die unterste Halbschale 44 identisch, wobei in die Halbschale 44 die Platte 8 eingesetzt ist. Die mittlere Halbschale 46 hat eine im Vergleich zu den anderen Halbschalen 43, 44 spiegelsymmetrische Form, d.h. ihr Bereich großer Tiefe liegt auf der entgegengesetzten Seite als bei den Halbschalen 43 und 44. In der untersten Halbschale 44 kann daher links vorne eine Pflanze gesetzt werden, deren Höhe bis zur obersten Halbschale reichen kann und in die mittlere Halbschale kann rechts vorne eine Pflanze beliebiger Höhe gepflanzt werden.

Mit der vorliegenden Erfindung ist eine Vielzahl verschiedener Pflanzmodule verwirklichbar, die gegenüber den Pflanzmodulen des Standes der Technik vorteilhaft sind. Zweifellos ist gewerbliche Anwendbarkeit gegeben.

## Patentansprüche

1. Pflanzmodul mit vertikal übereinander vorgesehenen Pflanzgefäßen mit einer geschlossenen Rückwand (1) und mit mindestens zwei an der Vorderseite der Rückwand (1) übereinander angeordneten, zur Rückwand hin offenen Halbschalen (2, 3; 14, 15; 22, 23, 43, 44, 46), die zusammen mit der geschlossenen Rückwand (1) jeweils ein eigenes Pflanzgefäß bilden, wobei eine untere Halbschale (2, 14, 22, 44) zusammen mit der geschlossenen Rückwand (1) ein unteres Pflanzgefäß bildet, und mindestens eine obere Halbschale (3, 15, 23, 43, 46) zusammen mit der geschlossenen Rückwand (1) ein oberes Pflanzgefäß bildet, **dadurch gekennzeichnet, dass** das obere Pflanzgefäß einen Boden mit einer Bodenaussparung (4) aufweist, wobei die Bodenaussparung flächenmäßig kleiner ist als der Innenquerschnitt des Pflanzgefäßes unmittelbar über dem Boden, und der Boden in einem nicht von der Bodenaussparung (4) eingenommenen Bereich mit Wasser-Durchtrittsöffnungen (5) versehen ist.

2. Pflanzmodul nach Anspruch 1, **dadurch gekennzeichnet, dass** unter dem von der unteren Halbschale (2, 14, 22, 44) zusammen mit der geschlossenen Rückwand (1) gebildeten, unteren Pflanzgefäß ein Wasserauffangtrog (6) angeordnet ist und dass das untere Pflanzgefäß einen Boden aufweist, der mit Wasser-Durchtrittsöffnungen (5) versehen ist.

3. Pflanzmodul nach Anspruch 2, **dadurch gekennzeichnet, dass** das über dem Wasserauffangtrog (6) angeordnete, untere Pflanzgefäß einen Boden mit einer Bodenaussparung (4) aufweist, die durch eine mit Wasser-Durchtrittsöffnungen (7) versehenen Platte (8) abgedeckt ist.

4. Pflanzmodul nach Anspruch 2 oder 3, **dadurch gekennzeichnet, dass** an der Rückwand Haltekonsolen (9) für den Wasserauffangtrog (6) vorgesehen sind, die vorzugsweise mit der Rückwand (1) einstückig ausgebildet sind.

5. Pflanzmodul nach Anspruch 4, **dadurch gekennzeichnet, dass** der Wasserauffangtrog (6) mit den Haltekonsolen (9) über eine lösbare Verbindung verbunden ist, wobei vorzugsweise die lösbare Verbindung eine Schiebeverbindung ist.

6. Pflanzmodul nach einem der Ansprüche 2 bis 5, **dadurch gekennzeichnet, dass** die Rückwand aus zwei oder mehreren miteinander verbundenen Rückwandteilen (41, 42) besteht, wobei ein Rückwandteil (42) den Wasserauffangtrog (6) trägt und der oder die anderen Rückwandteile (41) die Halbschalen (43, 44) tragen.

7. Pflanzmodul nach einem der Ansprüche 1 bis 6, **dadurch gekennzeichnet, dass** die Rückwand (1) an ihren seitlichen Rändern nach vorne ragende Rückwandabschnitte (45) aufweist, wobei vorzugsweise die Rückenwandabschnitte konkav sind.

8. Pflanzmodul nach Anspruch 7, **dadurch gekennzeichnet, dass** die Rückwand (1) an ihrer Rückseite an den seitlichen Rändern Hohlräume aufweist.

9. Pflanzmodul nach Anspruch 8, **dadurch gekennzeichnet, dass** in den Hohlräumen Verstärkungselemente oder Tragholme angeordnet sind.

10. Pflanzmodul nach einem der Ansprüche 1 bis 9, **dadurch gekennzeichnet, dass** mindestens eine der mit der Rückwand (1) ein Pflanzgefäß bildenden Halbschalen (2, 3, 43, 44, 46) abnehmbar ist und dass an der Vorderseite der Rückwand (1) nach vorne abstehende Halteelemente (10, 11) für die abnehmbare Halbschale (2, 3, 43, 44, 46) vorgesehen sind.

11. Pflanzmodul nach Anspruch 10, **dadurch gekennzeichnet, dass** die Halteelemente (10) an den nach vorne ragenden Rückwandabschnitten (45) angeordnet sind.

12. Pflanzmodul nach Anspruch 10 oder 11, **dadurch gekennzeichnet, dass** die abnehmbare Halbschale (2, 3, 43, 44, 46) mit ihren Seitenwänden (12) an von der Rückwand (1) nach vorne abstehenden Halteflanschen (10) als Halteelemente abgestützt ist, die gegenüber der Vertikalen sich nach unten verjüngend geneigt verlaufen, und/oder, dass die abnehmbaren Halbschalen (2, 3) mit ihrem Boden (13) an von der Rückwand (1) nach vorne abstehenden Vorsprüngen (11) als Halteelemente abgestützt ist.

13. Pflanzmodul nach einem der vorhergehenden Ansprüchen, **dadurch gekennzeichnet, dass** die normal zur Rückwand (1) verlaufende Tiefe (t₁, t₂) mindestens eines Pflanzgefäßes von einer Seite des Pflanzgefäßes zur seiner anderen Seite hin zunimmt.

14. Pflanzmodul nach Anspruch 13, **dadurch gekennzeichnet, dass** bei mehreren Pflanzgefäßen die normal zur Rückwand verlaufende Tiefe (t₁, t₂) von einer Seite des Pflanzgefäßes zur seiner anderen Seite hin zunimmt und das mindestens ein Pflanzgefäß seine größere Tiefe (t₂) auf der anderen Seite aufweist, wie das oder die anderen Pflanzgefäße.

15. Pflanzmodul nach einem der Ansprüche 1 bis 14, **dadurch gekennzeichnet, dass** mindestens eine der Halbschalen (14, 15) zweiteilig ist und einen mit der Rückwand (1) einstückig ausgebildeten, hinteren Schalenteil (16, 18) und einen von der Rückwand (1) abnehmbaren, vorderen Schalenteil (17, 19) besitzt.

16. Pflanzmodul nach Anspruch 15, **dadurch gekennzeichnet, dass** die Seitenwände (27, 28) der hinteren Schalenteile (17, 19) gegenüber der Vertikalen sich nach unten verjüngend geneigt verlaufen und die Seitenwände (27, 28) der hinteren Schalenteile (17, 19) zweier übereinanderliegender Pflanzgefäße jeweils durch eine Verstrebung (29) miteinander verbunden sind, die gegenüber der Vertikalen in die entgegengesetzte Richtung geneigt sind wie die Seitenwände (27, 28), wobei vorzugsweise die Vertrebung (29) mit der Rückwand (1) einstückig ist.

17. Pflanzmodul nach einem der Ansprüche 15 oder 16, **dadurch gekennzeichnet, dass** die Bodenaussparung (4) in dem mit der geschlossenen Rückwand (1) einstückig ausgebildeten, hinteren Schalenteil (16) der zweiteiligen Halbschale (15) angeordnet ist.

18. Pflanzmodul nach einem der Ansprüche 1 bis 17, **dadurch gekennzeichnet, dass** an den Seitenrändern der Rückwand (1) und/oder am unteren Rand der Rückwand (1) nach vorne bzw. nach unten abstehende Stege (20) vorgesehen sind.

19. Pflanzmodul nach einem der Ansprüche 1 bis 18, **dadurch gekennzeichnet, dass** das Pflanzmodul zwei seitlich an der Rückwand (1) angeordnete Standfüße (21) aufweist, wobei vorzugsweise die Standfüße mit arretierbaren Rollen (24) versehen sind.

20. Pflanzmodul nach einem der Ansprüche 1 bis 19, **dadurch gekennzeichnet, dass** an der Vorderseite der Rückwand (1) mehrere Rippen (25) ausgebildet sind, die sich in einem Abstand zu den Böden (13) der Halbschalen (2, 3; 14, 15; 22, 23, 43, 44, 46) oberhalb der Böden (13) erstrecken, wobei vorzugsweise jeweils zwei Rippen (25) im Bereich jeder Halbschale (2, 3; 14, 15; 22, 23, 43, 44, 46) ausgebildet sind und wobei vorzugsweise die Rippen (25) sich an ihren Enden (26) im Abstand zu den Seitenwände (12) der Halbschalen (2, 3; 14, 15; 22, 23, 43, 44, 46) erstrecken.

21. Pflanzmodul nach einem der Ansprüche 1 bis 20, **dadurch gekennzeichnet, dass** eine oder mehrere der Halbschalen (2, 3; 14, 15; 22, 23, 43, 44, 46) entlang der Bodenaussparung (4) oder im Bereich der Bodenaussparung (4) durch eine Kante (31) verstärkt sind, deren Höhe größer ist als die Materialstärke der Halbschalen in diesem Bereich.

22. Pflanzmodul nach einem der Ansprüche 2 bis 21, **dadurch gekennzeichnet, dass** vom Wasserauffangtrog (6) ein oder mehrere Wasserrückführungselemente (30) zu mindestens einem der Pflanzgefäße führen, wobei vorzugsweise die Wasserrückführungselemente (30) Glasfaserdochte sind.

23. Pflanzmodul nach Anspruch 22, **dadurch gekennzeichnet, dass** die Anzahl der Wasserrückführungselemente (30) bzw. die Kapazität der Wasserführungsmenge der Wasserrückführungselemente, die in ein bestimmtes Pflanzengefäß münden, größer ist als die Anzahl der
Wasserrückführungselemente (30) bzw. die Kapazität der Wasserrückführungsmenge der Wasserrückführungselemente, die in das darunter liegende Pflanzgefäß münden.

## Claims

1. A plant module having plant containers provided vertically above one another, with a closed rear wall (1) and with at least two half shells (2, 3; 14, 15; 22, 23, 43, 44, 46), which are open towards the rear wall and arranged above one another on the front side of the rear wall (1) and which together with the closed rear wall (1) form an individual plant container in each case, a lower half shell (2, 14, 22, 44) forming a lower plant container together with the closed rear wall (1), and at least one upper half shell (3, 15, 23, 43, 46) forming an upper plant container together with the closed rear wall (1), **characterized in that** the upper plant container has a base with a base opening (4), wherein the base opening is smaller in terms of area than the inner cross section of the plant container directly above the base, and the base is provided with water openings (5) in a region not taken up by the base opening (4).

2. The plant module according to Claim 1, **characterized in that** a water catchment tray (6) is arranged below the lower plant container formed by the lower half shell (2, 14, 22, 44) together with the closed rear wall (1), and **in that** the lower plant container has a base which is provided with water openings (5).

3. The plant module according to Claim 2, **characterized in that** the lower plant container arranged above the water catchment tray (6) has a base with a base opening (4), which is covered by a plate (8) provided with water openings (7).

4. The plant module according to Claim 2 or 3, **characterized in that** retaining brackets (9) for the water catchment tray (6) are provided on the rear wall, which are preferably formed in one piece with the rear wall (1).

5. The plant module according to Claim 4, **characterized in that** the water catchment tray (6) is connected to the retaining brackets (9) by means of a detachable connection, wherein the detachable connection is preferably a sliding connection.

6. The plant module according to one of Claims 2 to 5, **characterized in that** the rear wall consists of two or more mutually connected rear wall parts (41, 42), wherein one rear wall part (42) carries the water catchment tray (6) and the other rear wall part(s) (41) carry the half shells (43, 44).

7. The plant module according to one of Claims 1 to 6, **characterized in that** the rear wall (1) has forward protruding rear wall sections (45) at its lateral edges, wherein the rear wall sections are preferably concave.

8. The plant module according to Claim 7, **characterized in that** the rear wall (1) has cavities on its rear side at the lateral edges.

9. The plant module according to Claim 8, **characterized in that** reinforcing elements or support bars are arranged in the cavities.

10. The plant module according to one of Claims 1 to 9, **characterized in that** at least one of the half shells (2, 3, 43, 44, 46) forming a plant container with the rear wall (1) can be removed and **in that** forward protruding retaining elements (10, 11) for the removable half shells (2, 3, 43, 44, 46) are provided on the front side of the rear wall (1).

11. The plant module according to Claim 10, **characterized in that** the retaining elements (10) are arranged on the forward protruding rear wall sections (45).

12. The plant module according to Claim 10 or 11, **characterized in that** the removable half shell (2, 3, 43, 44, 46) is supported by way of the side walls (12) thereof on retaining flanges (10), which project forwards from the rear wall (1), as retaining elements, which run in a downwards tapering inclined manner with respect to the vertical, and/or, **in that** the removable half shells (2, 3) are supported by way of the base (13) thereof on projections (11), which project forwards from the rear wall (1), as retaining elements.

13. The plant module according to one of the preceding claims, **characterized in that** the depth (t1, t2) orientated orthogonally to the rear wall (1) of at least one plant container increases from one side of the plant container to the other side thereof.

14. The plant module according to Claim 13, **characterized in that** in the case of a plurality of plant containers, the depth (t1, t2) orientated orthogonally to the rear wall increases from one side of the plant container to the other side thereof and that at least one plant container has its larger depth (t2) on the other side than the other plant container(s).

15. The plant module according to one of Claims 1 to 14, **characterized in that** at least one of the half shells (14, 15) is divided into two parts and has a rear shell part (16, 18) constructed in one piece with the rear wall (1) and a front shell part (17, 19) which can be removed from the rear wall (1).

16. The plant module according to Claim 15, **characterized in that** the side walls (27, 28) of the rear shell parts (17, 19) run in a downward tapering manner with respect to the vertical, and the side walls (27, 28) of the rear shell parts (17, 19) of two plant containers lying above one another are in each case connected to one another by means of a strut (29), which are inclined in the opposite direction as are the side walls (27, 28), wherein the strut (29) is preferably in one piece with the rear wall (1).

17. The plant module according to one of Claims 15 or 16, **characterized in that** the base opening (4) is arranged in the rear shell part (16) of the two-part half shell (15), which is constructed in one piece with the closed rear wall (1).

18. The plant module according to one of Claims 1 to 17, **characterized in that** webs (20), which project forwards or downwards, are provided at the side edges of the rear wall (1) and/or at the lower edge of the rear wall (1).

19. The plant module according to one of Claims 1 to 18, **characterized in that** the plant module has two supporting feet (21) arranged laterally on the rear wall (1), wherein the supporting feet are preferably supplied with lockable rollers (24).

20. The plant module according to one of Claims 1 to 19, **characterized in that** multiple ribs (25) are constructed on the front side of the rear wall (1), which ribs extend at a distance from the bases (13) of the half shells (2, 3; 14, 15; 22, 23, 43, 44, 46) above the bases (13), wherein two ribs (25) in each case are preferably constructed in the region of each half shell (2, 3; 14, 15; 22, 23, 43, 44, 46) and wherein the ribs (25) preferably extend at the ends (26) thereof at a distance from the side walls (12) of the half shells (2, 3; 14, 15; 22, 23, 43, 44, 46).

21. The plant module according to one of Claims 1 to 20, **characterized in that** one or more of the half shells (2, 3; 14, 15; 22, 23, 43, 44, 46) are reinforced along the base opening (4) or in the region of the base opening (4) by means of an edge (31), the height of which is greater than the material thickness of the half shells in this region.

22. The plant module according to one of Claims 2 to 21, **characterized in that** one or more water recirculation elements (30) lead from the water catchment tray (6) to at least one of the plant containers, wherein the water recirculation elements (30) are preferably glass-fibre wicks.

23. The plant module according to Claim 22, **characterized in that** the number of water recirculation elements (30) or the capacity of the water flow quantity of the water recirculation elements, which open into a particular plant container, is larger than the number of water recirculation elements (30) or the capacity of the water flow quantity of the water recirculation elements, which open into the plant container located therebelow.

## Revendications

1. Module pour plantation avec des bacs à plantes prévus verticalement les uns sur les autres avec une paroi arrière fermée (1) et avec au moins deux demi-coques (2,3;14,15;22,23,43,44,46) disposées l'une sur l'autre sur la face avant de la paroi arrière (1) ouvertes vers la paroi arrière, qui forment ensemble avec la paroi arrière fermée (1) respectivement un bac à plantes proprement dit, une demi-coque inférieure (2,14,2,44) formant ensemble avec la paroi arrière fermée (1) un bac à plantes inférieur et au moins une demi-coque supérieure (3,15,23,43,46) formant ensemble avec la paroi arrière fermée (1) un bac à plantes supérieur, **caractérisé en ce que** le bac à plantes supérieur comporte un fond avec un évidement de fond (4), l'évidement de fond étant en surface plus petit que la section transversale intérieure du bac à plantes directement au-dessus du fond et le fond étant doté d'ouvertures de passage pour l'eau (5) dans une zone non occupée par l'évidement de fond (4).

2. Module pour plantation selon la revendication 1, **caractérisé en ce qu'**un bac collecteur d'eau (6) est disposé sous le bac à plantes inférieur formé par la demi-coque inférieure (2,14,22,44) ensemble avec la paroi arrière fermée (1) et **en ce que** le bac à plantes inférieur comporte un fond qui est doté d'ouvertures de passage pour l'eau (5).

3. Module pour plantation selon la revendication 2, **caractérisé en ce que** le bac à plantes inférieur disposé au-dessus du bac collecteur d'eau (6) comporte un fond avec un évidement de fond (4) qui est couvert par une plaque (8) dotée d'ouvertures de passage pour l'eau (7).

4. Module pour plantation selon la revendication 2 ou 3, **caractérisé en ce que** des consoles de retenue (9) pour le bac collecteur d'eau (6) sont prévues sur la paroi arrière qui sont constituées de préférence en une seule pièce avec la paroi arrière (1).

5. Module pour plantation selon la revendication 4, **caractérisé en ce que** le bac collecteur d'eau (6) est relié aux consoles de retenue (9) par le biais d'une liaison amovible, la liaison amovible étant de préférence une liaison coulissante.

6. Module pour plantation selon l'une quelconque des revendications 2 à 5, **caractérisé en ce que** la paroi arrière est composée de deux ou plusieurs parties de paroi arrière (41,42) reliées entre elles, une partie de paroi arrière (42) supportant le bac collecteur d'eau (6) et l'autre ou les autres parties de paroi arrière (41) supportant les demi-coques (43,44).

7. Module pour plantation selon l'une quelconque des revendications 1 à 6, **caractérisé en ce que** la paroi arrière (1) comporte sur ses bords latéraux des sections de paroi arrière (45) faisant saillie vers l'avant, les sections de paroi arrière étant de préférence concaves.

8. Module pour plantation selon la revendication 7, **caractérisé en ce que** la paroi arrière (1) comporte des espaces creux sur sa face arrière sur les bords latéraux.

9. Module pour plantation selon la revendication 8, **caractérisé en ce que** des éléments de renfort ou longerons de support sont disposés dans les espaces creux.

10. Module pour plantation selon l'une quelconque des revendications 1 à 9, **caractérisé en ce qu'**au moins une des demi-coques (2,3,43,44,46) formant un bac à plantes avec la paroi arrière (1) est détachable et **en ce que** sur la face avant de la paroi arrière (1) des éléments de retenue (10,11) faisant saillie vers l'avant sont prévus pour les demi-coques (2,3,43,44,46) détachables.

11. Module pour plantation selon la revendication 10, **caractérisé en ce que** les éléments de fixation (10) sont disposés sur les sections de paroi arrière (45) dépassant vers l'avant.

12. Module pour plantation selon l'une quelconque des revendications 10 ou 11, **caractérisé en ce que** la demi-coque (2,3,43,44,46) détachable est soutenue avec ses parois latérales (12) sur des brides de fixation (10) faisant saillie de la paroi arrière (1) vers l'avant en tant qu'éléments de fixation, qui passent inclinées par rapport à la verticale en diminuant vers le bas et/ou **en ce que** les demi-coques détachables (2,3) sont soutenues avec leur fond (13) sur des saillies (11) dépassant de la paroi arrière (1) vers l'avant en tant qu'éléments de fixation.

13. Module pour plantation selon l'une quelconque des revendications précédentes, **caractérisé en ce que** la profondeur (t₁,t₂) d'au moins un bac à plantes passant verticalement par rapport à la paroi arrière (1) augmente depuis un côté du bac à plantes vers son autre côté.

14. Module pour plantation selon la revendication 13, **caractérisé en ce que** pour plusieurs bacs à plantes la profondeur (t₁,t₂) passant verticalement par rapport à la paroi arrière augmente depuis un côté du bac à plantes vers son autre côté et **en ce qu'**au moins un bac à plantes comporte sa plus grande profondeur (t₂) sur l'autre côté comme l'autre ou les autres bacs à plantes.

15. Module pour plantation selon l'une quelconque des revendications 1 à 14, **caractérisé en ce qu'**au moins une des demi-coques (14,15) est en deux parties et possède une partie de coque (16,18) arrière constituée en une seule pièce avec la paroi arrière (1) et une partie de coque (17,19) avant détachable de la paroi arrière (1).

16. Module pour plantation selon la revendication 15, **caractérisé en ce que** les parois latérales (27,28) des parties de coque arrière (17,19) passent inclinées par rapport à la verticale en diminuant vers le bas et les parois latérales (27,28) des parties de coque arrière (17,19) de deux bacs de plantation superposés sont respectivement reliées entre elles par un renfort (29), qui est incliné dans la direction opposée par rapport à la verticale, comme les parois latérales (27,28), le renfort (29) étant constitué en une seule pièce avec la paroi arrière (1).

17. Module pour plantation selon l'une quelconque des revendications 15 ou 16, **caractérisé en ce que** l'évidement de fond (4) est disposé dans la partie de coque (16) arrière de la demi-coque en deux parties (15), constituée en une seule pièce avec la paroi arrière (1).

18. Module pour plantation selon l'une quelconque des revendications 1 à 17, **caractérisé en ce que** des moulures (20) faisant saillie vers l'avant ou vers le bas sont prévues sur les bords latéraux de la paroi arrière (1) et/ou sur le bord inférieur de la paroi arrière (1).

19. Module pour plantation selon l'une quelconque des revendications 1 à 18, **caractérisé en ce que** le module pour plantation comporte deux pieds de support (21) disposés sur le côté de la paroi arrière (1), les pieds de support étant dotés de préférence de roulettes blocables (24).

20. Module pour plantation selon l'une quelconque des revendications 1 à 19, **caractérisé en ce que** sur la face avant de la paroi arrière (1) plusieurs nervures (25) sont constituées, qui s'étendent au-dessus des fonds (13) à distance des fonds (13) des demi-coques (2,3;14,15;22,23,43,44,46), deux nervures (25) étant de préférence respectivement constituées dans la zone de chaque demi-coque (2,3 ;14,15 ;22,23,43,44,46) et les nervures (25) s'étendant de préférence à leurs extrémités (26) à distance des parois latérales (12) des demi-coques (2,3;14,15;22,23,43,49,46).

21. Module pour plantation selon l'une quelconque des revendications 1 à 20, **caractérisé en ce qu'**une ou plusieurs des demi-coques (2,3;14,15;22,23,43,44,46) sont renforcées par une arête (31) le long de l'évidement de fond (4) ou dans la zone de l'évidement de fond (4) dont la hauteur est supérieure à l'épaisseur de matériau des demi-coques dans cette zone.

22. Module pour plantation selon l'une quelconque des revendications 2 à 21, **caractérisé en ce qu'**un ou plusieurs éléments de recirculation d'eau (30) conduisent du bac collecteur d'eau (6) à au moins un des bacs à plantes, les éléments de recirculation d'eau (30) étant de préférence des mèches de fibres de verre.

23. Module pour plantation selon la revendication 22, **caractérisé en ce que** le nombre des éléments de recirculation d'eau (30) ou la capacité du débit de conduit d'eau des éléments de recirculation d'eau, qui débouchent dans un certain bac à plantes, est plus important que le nombre des éléments de recirculation d'eau (30) ou la capacité du débit de conduit d'eau des éléments de recirculation d'eau qui débouchent dans le bac à plantes situé dessous.
